# EUROPEAN PATENT APPLICATION

(11) **EP 4 427 952 A1**
(43) Date of publication of application: **11.09.2024**
(21) Application number: 23160510.6
(22) Date of filing: 07.03.2023
(51) Int. Cl.: B60G 15/06, B25J 5/00, B60G 3/01, E01C 23/22, B60B 19/12, E01C 23/20

(54) **MARKING ROBOT**

(71) Applicant: Yanmar Holdings Co., Ltd., Osaka-shi, Osaka (JP)
(72) Inventor: ARGIOLAS, Alfredo, Firenze (IT); NICCOLINI, Marta, Firenze (IT); CASINI, Simona, Firenze (IT); SORELLI, Edoardo, Firenze (IT)
(74) Representative: Dennemeyer & Associates S.A.

(57) **Abstract**

[Problem] To provide a marking robot that can perform marking work with high accuracy even when traveling on a floor surface where foreign matter exists.

[Solution] The marking robot comprises a main body to which a marking unit is attached, a plurality of wheels, and a plurality of wheel support parts attached to the main body to support the plurality of wheels respectively. At least one of the plurality of wheel support parts has a suspension mechanism.

## Description

### TECHNICAL FIELD

The present invention relates to a marking robot.

### BACKGROUND ART

Marking work is performed at construction sites such as buildings. The marking work refers to work of marking out lines necessary for progress of construction work on a floor surface with black ink or other ink according to design drawings. For example, Patent Document 1 discloses a marking robot that performs marking work.

### PRIOR ART DOCUMENT

### PATENT DOCUMENT

Patent Document 1: Japanese Unexamined Patent Application Publication No. 05-318334.

### SUMMARY OF INVENTION

### TECHNICAL PROBLEM

In some cases, when the marking robot travels on a floor surface where foreign matter exists, if any one of wheels is not in contact with the floor surface, the marking robot may not be able to move in a desired direction, and the marking work may not be performed at a desired location. For example, if a plurality of wheels are composed of mecanum wheels, the marking robot cannot be moved in a desired direction unless all of the plurality of wheels are in a state of being grounded on the floor surface. Thus, for example, when a left front wheel rides up on a convex portion on the floor surface, if a right front wheel lifts off the floor surface together with a robot body, the above-mentioned problem may occur.

The present invention has been made to solve the above-mentioned problem, an object of which is to provide a marking robot that can perform marking work with high accuracy even when traveling on a floor surface where foreign matter exists.

### SOLUTION TO PROBLEM

The marking robot according to one aspect of the present invention comprises a main body to which a marking unit is attached, a plurality of wheels, and a plurality of wheel support parts attached to the main body to support the plurality of wheels respectively, in which at least one of the plurality of wheel support parts has a suspension mechanism.

### ADVANTAGEOUS EFFECTS OF INVENTION

According to the above-mentioned configuration, marking work can be performed with high accuracy even when traveling on a floor surface where foreign matter exists.

### BRIEF DESCRIPTION OF DRAWINGS

FIG. 1 is a perspective view illustrating a schematic configuration of a marking robot according to an embodiment of the present invention.
FIG. 2 is a side view of the marking robot.
FIG. 3 is a schematic illustration of a site where marking work is performed by using the marking robot.
FIG. 4 is a side view illustrating states of a marking unit before and after marking work, respectively.
FIG. 5 is an illustration of movement patterns of the marking robot by driving wheels composed of mecanum wheels.
FIG. 6 is a perspective view of the marking robot viewed from front right, with the marking unit omitted in the figure.
FIG. 7 is an enlarged perspective view of a right front wheel support part.
FIG. 8 is a front view of the marking robot on a flat floor surface.
FIG. 9 is a front view of the marking robot in a state where a left front wheel rides up on a convex portion of a floor surface.
FIG. 10 is a side view of the marking robot on a flat floor surface.
FIG. 11 is a side view of the marking robot in a state where a right rear wheel rides up on a convex portion of a floor surface.
FIG. 12 is a perspective view of a drive system that drives a right side front wheel and a right side rear wheel of the marking robot, viewed from outside.
FIG. 13 is a perspective view of the drive system when viewed from inside a main body of the marking robot.
FIG. 14 is an enlarged perspective view of the marking unit.
FIG. 15 is an enlarged perspective view of a discharge part of the marking unit.
FIG. 16 is a side view schematically illustrating a positional relationship between an optical prism and the discharge part that are provided in the marking robot, when the marking robot travels on a horizontal floor surface and when the marking robot travels on an inclined floor surface.
FIG. 17 is a schematic illustration of different positions of the optical prisms.
FIG. 18 is a schematic illustration of an angular relationship between a versor and an axis, as well as an offset showing a deviation of a discharge position.

### DESCRIPTION OF EMBODIMENTS

Now, an embodiment of the present invention is described below with reference to the drawings. In describing a marking robot according to an embodiment of the present invention, directions are defined as follows for convenience. Specifically, when the marking robot travels in one direction on a floor surface, one side of the one direction is "front" and the other side is "rear". Then, when the marking robot travels forward on the floor surface, a right side is "right" and a left side is "left". An upstream side in a direction of gravity is "up" and a downstream side in the direction of gravity is "down". In addition, in each of the drawings, if necessary, forward is denoted by a symbol "F", likewise, backward by "B", rightward by "R", leftward by "L", upward by "U", and downward by "D". The above definitions of directions are for convenience of explanation only and do not limit the actual directions of use.

### [1. Marking Robot]

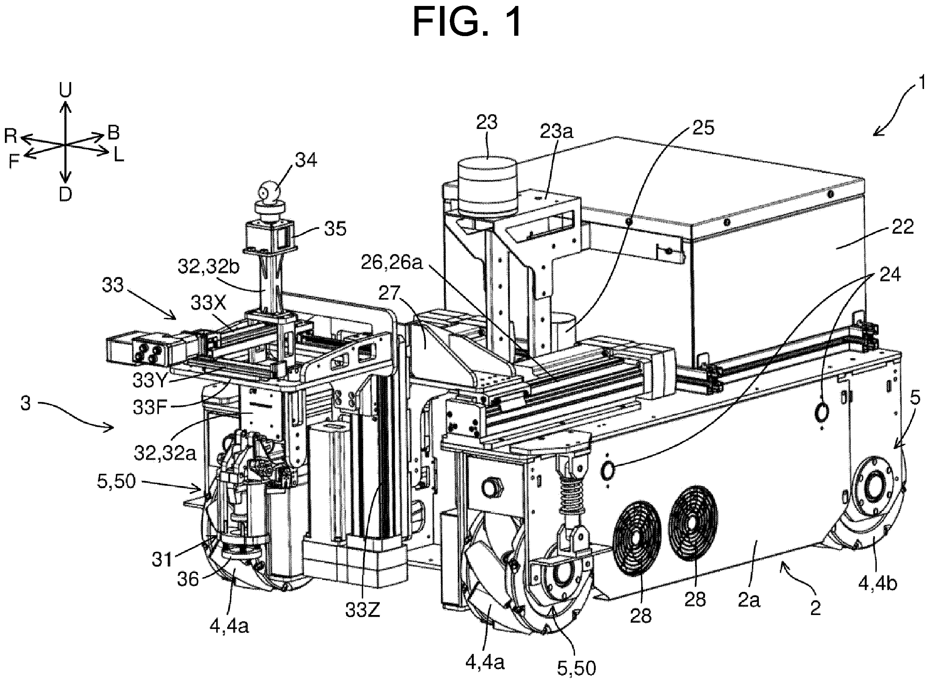

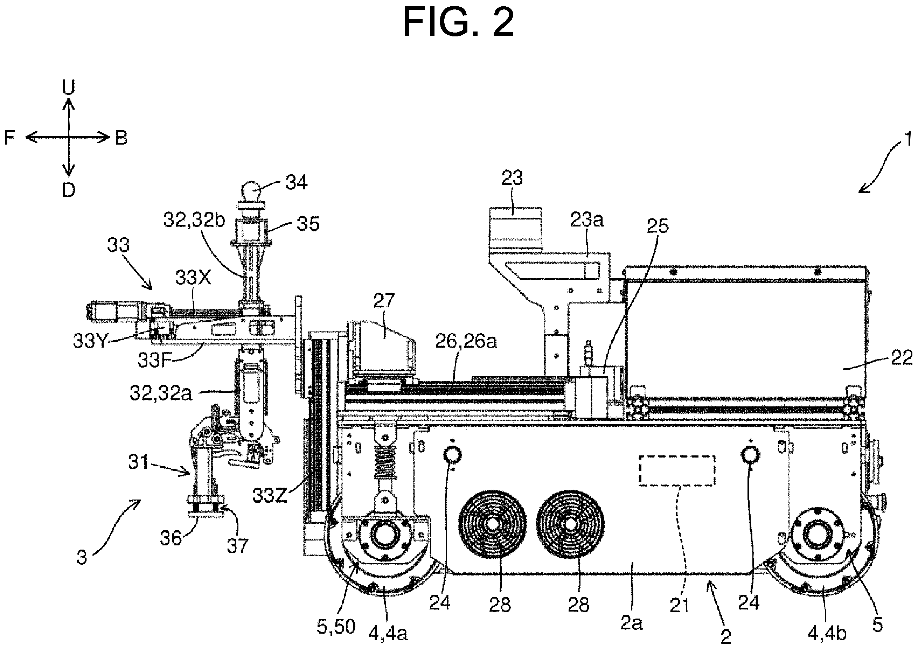

FIG. 1 is a perspective view illustrating a schematic configuration of a marking robot 1 according to an embodiment of the present invention. FIG. 2 is a side view of the marking robot 1. The marking robot 1 comprises a main body 2, a marking unit 3, a plurality of wheels 4, and a plurality of wheel support parts 5.

### (1-1. Main Body)

A control unit 21 (see FIG. 2) that controls operation of various parts of the marking robot 1 is housed inside the main body 2. The control unit 21 includes, for example, a Central Processing Unit (CPU; central arithmetic processing unit). On an upper surface of the main body 2, a battery pack 22 is mounted. Power is supplied from the battery pack 22 to each part of the marking robot 1.

A distance measuring unit 23 is supported on the upper surface of the main body 2 via a support stay 23a. The distance measuring unit 23 is located above the main body 2 and in front of the battery pack 22. The distance measuring unit 23 includes, for example, a three-dimensional Light Detection and Ranging (3D-Lidar), which uses a laser beam to measure a distance to an external environment. The measured distance is used to create and update a map of the external environment. The distance measuring unit 23 measures a distance to a surrounding obstacle (pillar, wall, object, person, etc.), which also enables to perform a control to avoid collision between the marking robot 1 and the obstacle on the basis of the distance.

Sonar sensor 24 are provided on each of left and right side surfaces 2a of the main body 2. Each of the sonar sensors 24 is a sensor that uses ultrasonic waves to measure a distance to an object. According to distances measured by the sonar sensors 24, if the marking robot 1 gets too close to an obstacle in an environment, it is possible to control to stop a movement of the marking robot 1 or to avoid collision with the obstacle during the movement of the marking robot 1. The sonar sensors 24 are provided side by side, spaced apart a front and back direction, on each of the left and right side surfaces 2a of the main body 2.

On the upper surface of the main body 2, a fiber optic gyroscope 25 is provided between the support stay 23a and the battery pack 22. The fiber optic gyroscope 25 acquires information about an orientation (posture) of the marking robot 1 in an environment.

Slide mechanisms 26 are provided at left front and right front on the upper surface of the main body 2, respectively. Each of the slide mechanisms 26 is a mechanism that moves the marking unit 3, which is described below, in the front and back direction and has a body rail 26a extending in the front and back direction. The marking unit 3 is movably attached on the body rail 26a via an attaching part 27. By providing the slide mechanisms 26 described above, a position of the marking unit 3 can be largely adjusted in the front and back direction by sliding the marking unit 3 largely along the body rail 26a.

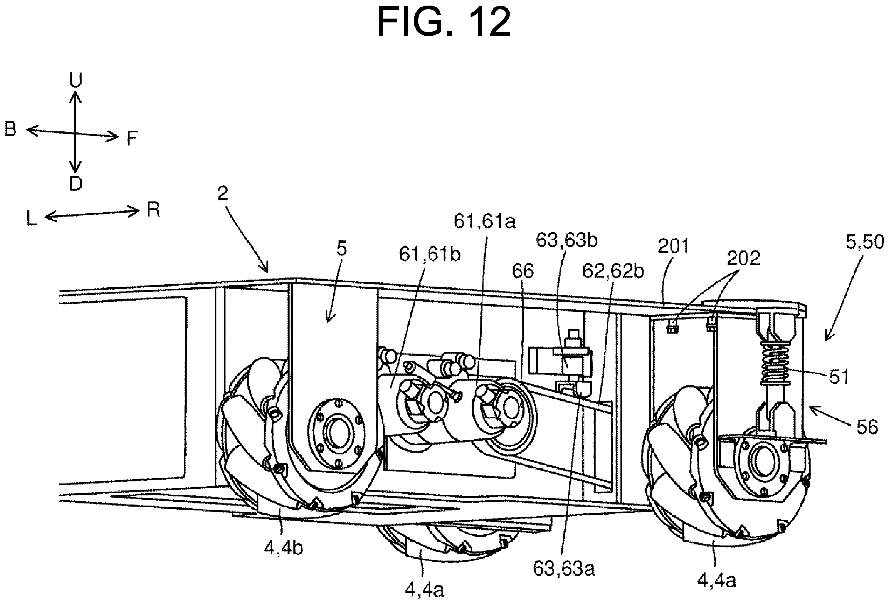

On each of the left and right side surfaces 2a of the main body 2, two airflow fans 28 are provided in front and back. Each of the airflow fans 28 is provided corresponding to each motor 61 (see FIG. 12) to cool each motor 61 that drives the plurality of wheels 4.

### (1-2. Marking Unit)

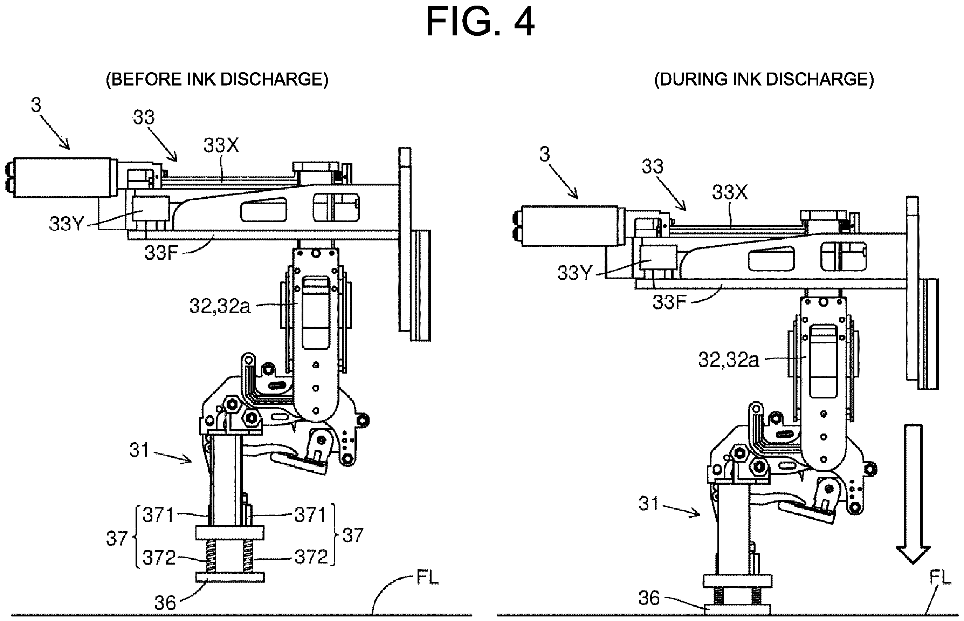

On a front side of the main body 2, the marking unit 3 is attached via the slide mechanisms 26 and the attaching part 27. The marking unit 3 marks a floor surface FL (see Fig. 4, etc.), i.e., discharges ink. The marking unit 3 comprises a discharge part 31, a holding part 32, a moving mechanism 33, and an optical prism 34.

The discharge part 31 discharges ink toward the floor surface FL. The discharge part 31 includes, for example, a spray gun. The holding part 32 holds the discharge part 31 and the optical prism 34. More specifically, the holding part 32 includes a first holding part 32a that holds the discharge part 31, and a second holding part 32b that holds the optical prism 34. The first holding part 32a and the second holding part 32b are connected up and down.

The moving mechanism 33 is a mechanism that moves the holding part 32 in a three-dimensional direction (each of X, Y, and Z directions) on the basis of control by the control unit 21, and is also called an end-effector. For convenience, the X direction is used for the front and back direction, the Y direction for a left and right direction, and the Z direction for an up and down direction. The moving mechanism 33 has a first rail 33X, a second rail 33Y, and a third rail 33Z. The first rail 33X is located extending in the X direction. The second rail 33Y is located extending in the Y direction. The third rail 33Z is located extending in the Z direction.

The first holding part 32a includes a frame that straddles the first rail 33X from above, and is supported movably in the X direction by the first rail 33X. The first rail 33X is supported movably in the Y direction by the second rail 33Y. The second rail 33Y is supported by the rail support 33F. The rail support 33F is supported movably in the Z direction by the third rail 33Z. With the above configuration, the holding part 32 can move in each of the X, Y, and Z directions along the first rail 33X, the second rail 33Y, and the third rail 33Z, respectively.

The second holding part 32b includes a pole extending upward from an upper surface of the first holding part 32a. The optical prism 34 described above is supported on an upper part of the second holding part 32b via a rotation mechanism 35. The rotation mechanism 35 rotates the optical prism 34 around an axis in the Z direction.

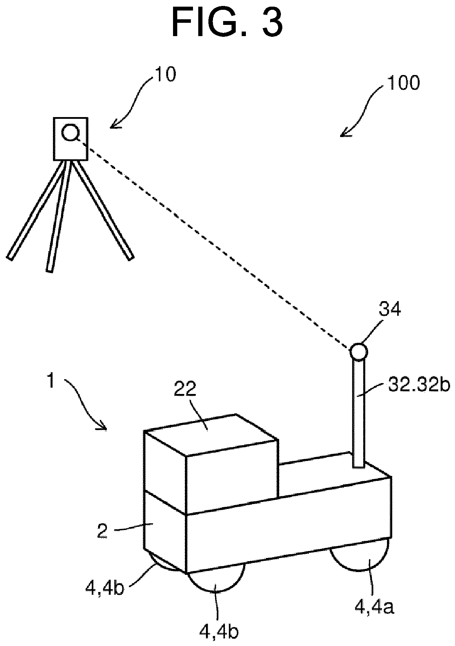

FIG. 3 schematically illustrates a site (marking system 100) where marking work is performed by using the marking robot 1. The optical prism 34 reflects light emitted from an external total station 10. The total station 10 emits light toward the optical prism 34 and electronically analyzes light reflected back by the optical prism 34 to measure a distance and an angle.

By using the total station 10 in combination with the optical prism 34 as described above, a position of the marking robot 1 can be detected. An external computer sends a control signal, which move the marking robot 1 to a predetermined position on the basis of the position of the marking robot 1 detected by the total station 10 and the map of the external environment, to the marking robot 1 via a communication line (e.g., wireless LAN). The total station 10 may also serve as the computer described above.

The control unit 21 (see Fig. 2) of the marking robot 1 drives the motor 61 (see Fig. 12) on the basis of the control signal and drives each of wheels 4 to move the marking robot 1 to a desired position. When the marking robot 1 reaches the desired position, ink discharge (marking work) is performed by the discharge part 31.

FIG. 4 is a side view illustrating states of the marking unit 3 before and after marking work, respectively. When the marking robot 1 reaches the desired position, the discharge part 31 is moved in a direction closer to the floor surface FL (downward) by the moving mechanism 33. Then, ink is discharged from the discharge part 31 under control of the control unit 21 in a state where a marker mask 36 (details to be described later) located at a tip side of the discharge part 31 is pressed against the floor surface FL. When ink discharge is completed, the discharge part 31 is moved away from the floor surface FL (upward) by the moving mechanism 33. The control unit 21 then drives the motor 61 to move the marking robot 1 to a next discharge position. Subsequently, the operations as described above are repeated.

### (1-3. Wheel)

As illustrated in FIGS. 1 and 2, the plurality of wheels 4 includes a front wheel 4a and a rear wheel 4b. In particular, the plurality of wheels 4 includes the front wheel 4a and the rear wheel 4b that respectively include right and left front wheels 4a and left and right rear wheel 4b. The plurality of wheels 4 (front wheels 4a, rear wheels 4b) are mecanum wheels.

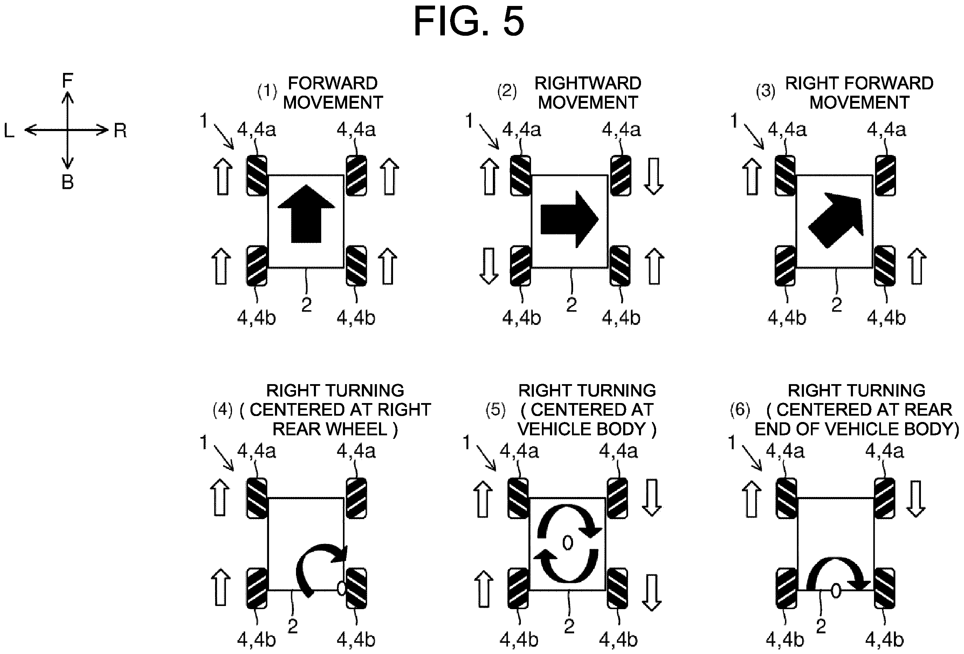

FIG. 5 is an illustration of movement patterns of the marking robot 1 by driving the wheels 4 composed of mecanum wheels. White arrows in the figure each indicate a rotation direction of each of the wheels 4 (forward or backward rotation), and black arrows each indicate a direction in which the marking robot 1 moves. Note that each of the wheels 4 without a white arrow indicates that rotation thereof is stopped.

When each of the wheels 4 is composed of a mecanum wheel, the rotation direction of each of the wheels 4 can be controlled individually, thereby the marking robot 1 can be moved in various directions and can also be turned around a predetermined position. FIG. 5 illustrates that by controlling the rotation direction of each of the wheels 4 individually, for example, it is possible to make the marking robot 1 perform (1) a forward movement, (2) a rightward movement, (3) a right forward (oblique direction) movement, (4) a right turn centered on the right rear wheel, (5) a right turn centered on a midpoint between a middle position of the left and right front wheels 4a and a middle position of the left and right rear wheels, and (6) a right turn centered on the middle position of the left and right rear wheels.

### (1-4. Wheel Support Part)

As illustrated in FIGS. 1 and 2, a plurality of wheel support parts 5 are attached to the main body 2. The plurality of wheel support parts 5 support the plurality of wheels 4, respectively. At least one of the plurality of wheel support parts 5 has a suspension mechanism 50. In this embodiment, among the plurality of wheel support parts 5, the wheel support parts 5 supporting the left and right front wheels 4a each have a suspension mechanism 50. The details of the suspension mechanism 50 are described below. Since the right front wheel support part 5 and the left front wheel support part 5 have the same configuration, the right front wheel support part 5 is described as an example here, and a description of the left front wheel support part 5 is omitted.

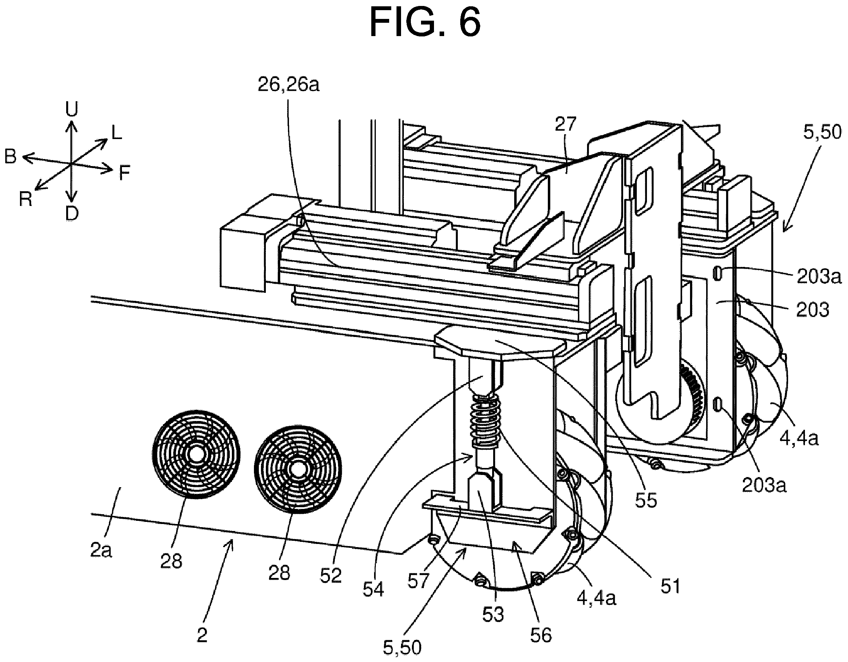

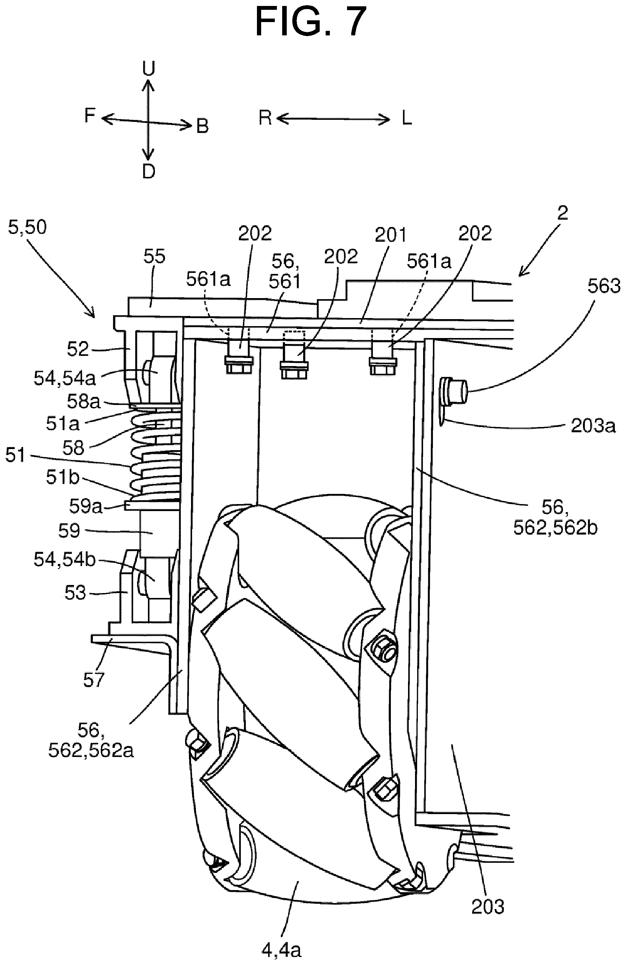

FIG. 6 is a perspective view of the marking robot 1 viewed from front right, with the marking unit 3 omitted in the figure. FIG. 7 is an enlarged perspective view of the right front wheel support part 5. The suspension mechanism 50 has an energizing member 51, a first bracket 52, a second bracket 53, and a damper 54.

The energizing member 51 is composed of, for example, a spring. The first bracket 52 is attached to the main body 2 via a support plate 55. The second bracket 53 is attached to a wheel frame 56, which pivotally supports the wheel 4, via a mounting stay 57 (see FIG. 7). The second bracket 53 is located lower than the first bracket 52. The wheel frame 56 is composed of an inverted U-shaped frame viewed from front, details of the wheel frame 56 are described below.

The damper 54 is a component that dampens vibration and cushions shock. The damper 54 has one end 54a and the other end 54b. The one end 54a is fixed to the first bracket 52. The other end 54b is fixed to the second bracket 53.

More specifically, the damper 54 has a piston rod 58 and a cylinder 59. The cylinder 59 accommodates the piston rod 58 in a movable manner. The piston rod 58 has the one end 54a described above and also has a first flange 58a on an outer circumference surface of the piston rod 58. The cylinder 59 has the other end 54b described above and also has a second flange 59a on an outer circumference surface of the cylinder 59.

The energizing member 51 described above has a first end 51a and a second end 51b. The first end 51a is fixed to the first flange 58a of the piston rod 58. The second end 51b is fixed to the second flange 59a of the cylinder 59.

In this configuration, the energizing member 51 can energize the second flange 59a in a direction of pressing down the second flange 59a with the first flange 58a as a reference (fulcrum). Here, the piston rod 58 having the first flange 58a as described above is fixed to the first bracket 52, and the first bracket 52 is attached to the main body 2 via the support plate 55. The cylinder 59 having the second flange 59a is fixed to the second bracket 53, and the second bracket 53 is attached to the wheel frame 56 via the mounting stay 57. Therefore, the energizing member 51 energizes the second flange 59a in the direction of pressing down the second flange 59a with the first flange 58a as a reference, so that an energizing force of the energizing member 51 is transmitted to the wheel frame 56 via the damper 54 (cylinder 59) having the second flange 59a, the second bracket 53, and the mounting stay 57. As a result, the wheel 4, which is pivotally supported by the wheel frame 56, is pressed down relative to the main body 2 and pressed toward the floor surface FL. In other words, the above configuration of the suspension mechanism 50 allows the energizing member 51 to energize the wheel 4, which is pivotally supported by the wheel frame 56, in the direction of pressing down relative to the main body 2 (in the direction of pressing toward the floor surface FL).

### (2. Operation of Suspension Mechanism)

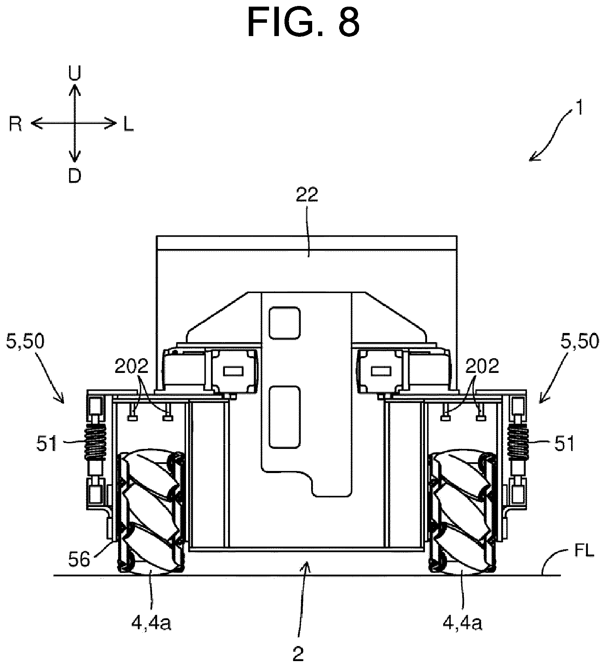

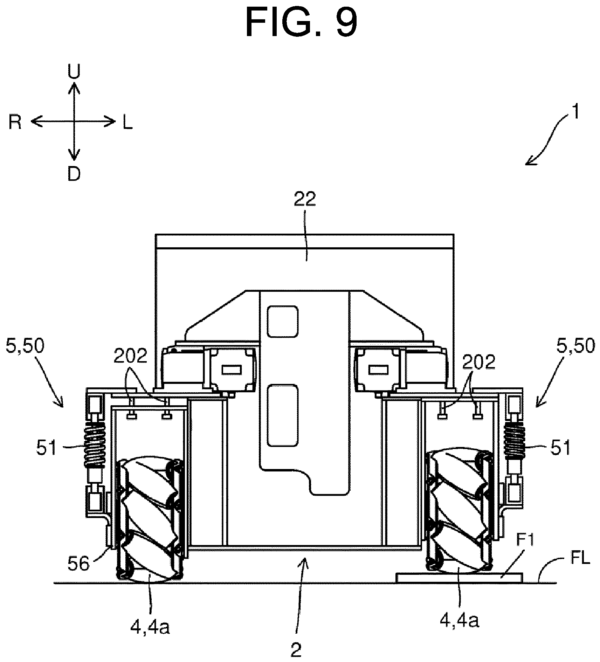

FIG. 8 is a front view of the marking robot 1 on a flat floor surface FL. FIG. 9 is a front view of the marking robot 1 in a state where the left front wheel 4a rides up on a convex portion F1 of the floor surface FL. In FIGS. 8 and 9, the marking unit 3 is omitted for convenience. A guide rail 202 is illustrated in FIGS. 8 and 9, and the details of the guide rail 202 are described below.

As illustrated in FIG. 9, when the left front wheel 4a rides up on the convex portion F1 of the floor surface FL, the front side of the main body 2 together with the left front wheel support part 5 moves higher than a rear side of the main body 2 (movement in a pitch direction). This causes the right front wheel 4a to try to lift off the floor surface FL.

However, in this embodiment, since the right front wheel support part 5 has the suspension mechanism 50, the right front wheel 4a is pressed toward the floor surface FL and the right front wheel 4a is kept in a state of ground contact, as illustrated in FIG. 9. More specifically, in the state where the right front wheel 4a tries to lift off the floor surface FL, force in a direction of pressing and contracting the energizing member 51 of the right front suspension mechanism 50 (force acting in an upward direction) is in a state where nothing works. Therefore, the right front energizing member 51 extends downward relative to the main body 2 by the energizing force of the right front energizing member 51, and presses down the right front wheel frame 56 according to the above-mentioned principle. As a result, the right front wheel 4a, which is pivotally supported by the right front wheel frame 56, is pressed toward the floor surface FL and is in a state of ground contact.

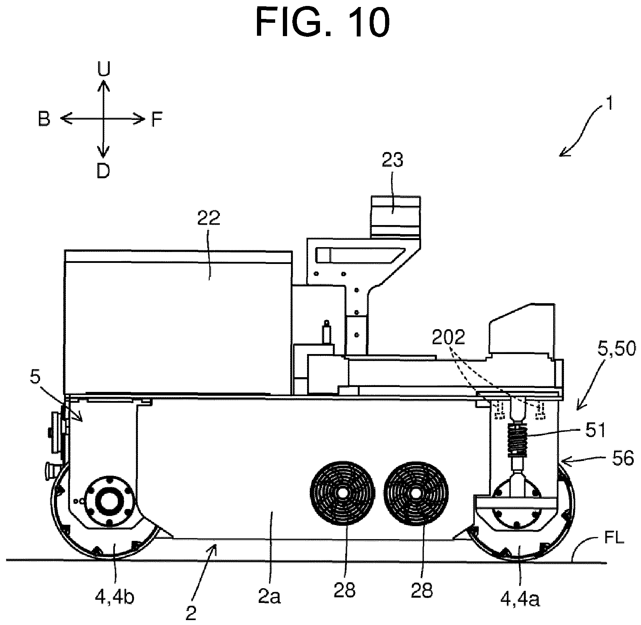

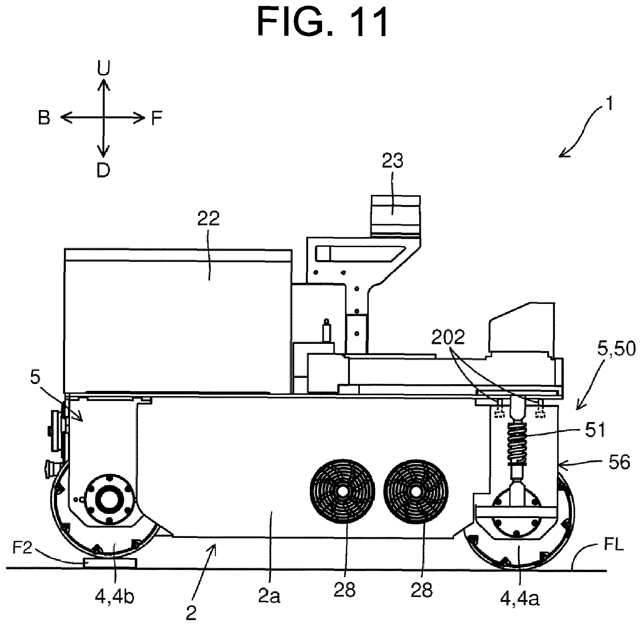

FIG. 10 is a side view of the marking robot 1 on the flat floor surface FL. FIG. 11 is a side view of the marking robot 1 in a state where the right rear wheel 4b rides up on a convex portion F2 of the floor surface FL. In FIGS. 10 and 11, the marking unit 3 is omitted for convenience. As illustrated in FIG. 11, when the right rear wheel 4b rides up on a convex portion F2 of the floor surface FL, a right side of the main body 2 together with the right rear wheel support part 5 moves higher than a left side of the main body 2 (movement in a roll direction). This causes the right front wheel 4a to try to lift off the floor surface FL.

However, in this embodiment, since the right front wheel support part 5 has the suspension mechanism 50, the right front wheel 4a is pressed toward the floor surface FL and the right front wheel 4a is kept in a state of ground contact, as illustrated in FIG. 11. In other words, in the state where the right front wheel 4a tries to lift off the floor surface FL, force in the direction of pressing and contracting the energizing member 51 of the right front suspension mechanism 50 is in a state where nothing works. Therefore, the right front energizing member 51 extends downward relative to the main body 2 by the energizing force of the right front energizing member 51, and presses down the right front wheel frame 56 according to the above-mentioned principle. As a result, the right front wheel 4a, which is pivotally supported by the right front wheel frame 56, is pressed toward the floor surface FL and is in a state of ground contact.

### (3. Effect)

As described above, the marking robot 1 in this embodiment has the suspension mechanism 50. In particular, the suspension mechanism 50 has the above-mentioned energizing member 51. Thereby, even if there is the convex portion F1, for example, on the floor surface FL on which the marking robot 1 travels, and one of the wheels 4 (for example, the left front wheel 4a) rides up on the convex portion F1, causing another of the wheels 4 (for example, the right front wheel 4a) try to lift up, the suspension mechanism 50 (especially the energizing member 51) can press down the another of the wheels 4 and make the another of the wheels 4 to be grounded on the floor surface FL. This allows all of the plurality of wheels 4 to be in a state of ground contact, and the marking robot 1 can be moved in all directions by driving the plurality of wheels 4. Therefore, even at locations where foreign matter exists on the floor surface FL (even when the floor surface FL is not flat), the marking robot 1 can be moved with high accuracy in a desired direction to a desired location. As a result, marking work can be performed with high accuracy at a desired location.

As illustrated in FIGS. 10 and 11, from a viewpoint of pressing down the front wheel 4a and making the front wheel 4a to be grounded on the floor surface FL even when there is the convex portion F2 on the floor surface FL and the rear wheel 4b rides up on the convex portion F2, it is desirable that, among the plurality of wheel support parts 5, the wheel support part 5 supporting the front wheel 4a has the suspension mechanism 50 described above.

As illustrated in FIGS. 8 and 9, from a viewpoint of pressing down the right front wheel 4a and making the right front wheel 4a to be grounded on the floor surface FL even when there is the convex portion F1 on the floor surface FL and the left front wheel 4a rides up on the convex portion F1, it is desirable that the wheel support parts 5 supporting the left and right front wheels 4a each have a suspension mechanism 50. In addition, from a viewpoint of pressing down the left front wheel 4a and making the left front wheel 4a to be grounded on the floor surface FL even when the right front wheel 4a rides up on the convex portion F1, it is desirable that the wheel support parts 5 supporting the left and right front wheels 4a each have a suspension mechanism 50.

Furthermore, from a viewpoint of absorbing shock when, for example, after the wheel 4 is pushed down to the floor surface FL relative to the main body 2 by the energizing member 51 and then the above wheel 4 returns to an original position thereof against the energization of the energizing member 51 (for example, when the right front wheel 4a, which was pressed down to the floor surface FL in Fig. 9, returns to an original position thereof because the left front wheel 4a exceeds the convex portion Fl), it is desirable for the suspension mechanism 50 to have the damper 54, as in this embodiment.

For the energizing member 51 to energize the wheel 4 supported by the wheel frame 56 in a direction of pressing down the wheel 4 relative to the main body 2, it is sufficient that the energizing member 51 can energize the second bracket 53 in a direction of pressing down the second bracket 53 relative to the first bracket 52. To do so, it is sufficient that the energizing member 51 can energize the second flange 59a in a direction of separating the second flange 59a from the first flange 58a. To realize such energization of the energizing member 51, it is desirable that the first end 51a of the energizing member 51 is fixed to the first flange 58a and the second end 51b of the energizing member 51 is fixed to the second flange 59a, as illustrated in Fig. 7.

When the plurality of wheels 4 are composed of mecanum wheels, it is necessary to make all the wheels 4 to be grounded on the floor surface when moving the marking robot 1 in all directions. Therefore, the configuration of this embodiment, in which the wheel 4 is pressed down and grounded on the floor surface FL by the energizing member 51 of the suspension mechanism 50, is particularly effective when the plurality of wheels 4 are mecanum wheels.

### [2. Configuration for Guiding Up and Down Movement of Front Wheel]

As illustrated in FIG. 7, the main body 2 of the marking robot 1 has a flat plate part 201 and the guide rail 202. The flat plate part 201 is located opposite (in the up and down direction) an upper surface part 561 of the wheel frame 56 supporting the front wheel 4a. Here, the upper surface part 561 is connected to upper ends of a pair of side surface parts 562 of the wheel frame 56. The pair of side surface parts 562 are located opposite each other in a direction of a rotational axis of the front wheel 4a (left and right direction in FIG. 7), and support each end of the rotational axis of the front wheel 4a, respectively.

The guide rail 202 is attached to the flat plate part 201 of the main body 2 and extends downward. In this embodiment, four guide rails 202 are attached to the flat plate part 201, but the number of the guide rails 202 is not particularly limited. The upper surface part 561 of the wheel frame has a hole 561a. The above-mentioned guide rail 202 passes through the hole 561a and contact an inner surface of the hole 561a.

In the above-mentioned configuration, when the energizing member 51 presses down the wheel 4 (especially the front wheel 4a) relative to the main body 2, the wheel frame 56 moves downward along the guide rail 202 while the hole 561a of the upper surface part 561 slide in contact with the guide rail 202. When the wheel 4 (especially the front wheel 4a) tries to return to an original position thereof against the energization of the energizing member 51, the wheel frame 56 moves upward along the guide rail 202 while the hole 561a slide in contact with the guide rail 202 (see FIGS. 8 to 11).

In any case, the wheel frame 56 moves straight in the up and down direction (without tilting relative to the up and down direction) along the guide rail 202. Therefore, the wheel 4 pivotally supported by the wheel frame 56 also moves straight in the up and down direction (without tilting relative to the up and down direction). From a viewpoint of moving the wheel 4 straight in a predetermined direction (up and down direction in the above-mentioned example), it is desirable that the upper surface part 561 of the wheel frame have the hole 561a that the guide rail 202 contacts with and passes through.

As illustrated in FIG. 7, the main body 2 has an opposing part 203. The opposing part 203 is located opposite (in the left and right direction) one of the pair of side surface parts 562 of the wheel frame 56. In particular, when the pair of side surface parts 562 are designated as a first side surface part 562a and a second side surface part 562b, the side surface part located between the energizing member 51 and the wheel 4 (front wheel 4a) is designated as the first side surface part 562a, and the side surface part located opposite the energizing member 51 (or wheel 4) relative to the first side surface part 562a is designated as the second side surface part 562b, the opposing part 203 is located opposite the second side surface part 562b.

The opposing part 203 has long holes 203a extending in the up and down direction. In this embodiment, the long holes 203a are provided at a total of four locations in the opposing part 203, two in the front and back direction and two in the up and down direction, but are not limited to these four locations, and may be provided at least one location. In FIG. 7, only one of the long holes 203a is illustrated as a representative.

On the other hand, the side surface part 562 of the wheel frame 56 described above (especially the second side surface part 562b) is provided with pins 563 that pass through the long holes 203a. In this embodiment, the pins 563 are provided at four locations on the side surface part 562 (second side surface part 562b) corresponding to the four long holes 203a, but may be provided at least one location. In FIG. 7, only one of the pins 563 is illustrated as a representative.

In the above-mentioned configuration, when the energizing member 51 presses down the wheel 4 (especially the front wheel 4a) relative to the main body 2, the wheel frame 56 moves downward while the pins 563 of the side surface part 562 (especially the second side surface part 562b) of the wheel frame 56 moves downward along the long holes 203a of the opposing part 203. When the wheel 4 (especially the front wheel 4a) tries to return to an original position thereof against the energization of the energizing member 51, the wheel frame 56 moves upward while the pins 563 of the side surface part 562 moves upward along the long holes 203a of the opposing part 203.

In any case, the wheel frame 56 moves straight in the up and down direction (without tilting relative to the up and down direction) along the guide rail 202. Therefore, the wheel 4 pivotally supported by the wheel frame 56 also moves straight in the up and down direction (without tilting relative to the up and down direction). From a viewpoint of performing a stable movement of the wheel 4 in the up and down direction, it is desirable that the opposing part 203 of the main body 2 has the long holes 203a extending in the up and down direction and that the side surface part 562 of the wheel frame 56 has the pins 563 that pass through the long holes 203a, as in this embodiment.

The above-mentioned long holes may be provided in the side surface part 562 and the above-mentioned pins may be provided in the opposing part 203. Therefore, in this embodiment, one of the opposing part 203 and the side surface part 562 may be provided with long holes (e.g., long holes 203a) extending in the up and down direction, and the other of the opposing part 203 and the side surface part 562 may be provided with pins (e.g., pins 563) that pass through the above long holes.

### [3. Wheel Drive System]

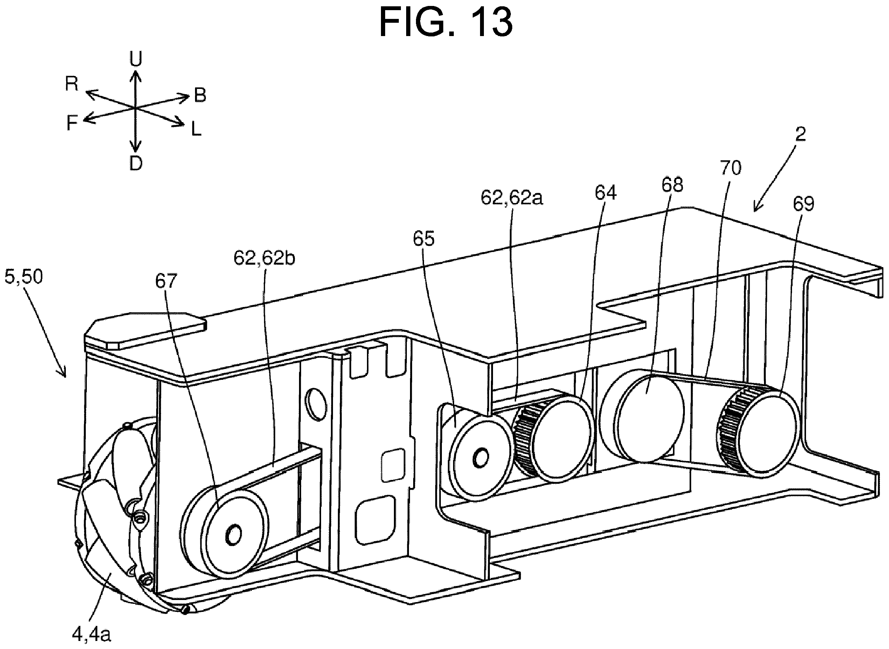

FIG. 12 is a perspective view of a drive system that drives the front wheel 4a and the rear wheel 4b on a right side of the marking robot 1, as seen from outside the main body 2. FIG. 13 is a perspective view of the drive system as seen from inside the main body 2. The marking robot 1 comprises, inside the main body 2, a motor 61, an endless belt 62, and a tension adjustment mechanism 63.

The motor 61 is a drive source that drives the wheels 4 and is provided for each of the wheels 4. The motor 61 is driven by power supplied from the battery pack 22 (see FIG. 1). In this embodiment, the motor 61 include a front wheel motor 61a that drive the front wheel 4a and a rear wheel motor 61b that drive the rear wheel 4b. The front wheel motor 61a includes left and right front wheel motors 61a provided on the main body 2, and the rear wheel motor 61b includes left and right rear wheel motors 61b provided on the main body 2.

The endless belt 62 transmits a driving force generated by rotation of the motor 61 to the wheel 4 (especially the front wheel 4a), which is supported by the suspension mechanism 50. The endless belt 62 includes a first endless belt 62a and a second endless belt 62b.

Inside the main body 2, there are provided a first driving gear 64, a first driven gear 65, a first coaxial gear 66, and a second coaxial gear 67. The first driving gear 64 is coaxial with a rotational axis of the front wheel motor 61a. The first endless belt 62a is tensioned over the first driving gear 64 and the first driven gear 65. The first coaxial gear 66 is coaxial with the first driven gear 65. The second endless belt 62b is tensioned over the first coaxial gear 66 and the second coaxial gear 67. The second coaxial gear 67 is coaxial with the wheel 4 (in this case, the front wheel 4a).

In this embodiment, the endless belt 62 is divided into the first endless belt 62a and the second endless belt 62b, but the endless belt 62 may be composed of a single endless belt. For example, the single endless belt may be tensioned over the first driving gear 64, which is coaxial with the rotational axis of the front wheel motor 61a, and the second coaxial gear 67, which is coaxial with the wheel 4 (in this case, the front wheel 4a).

Inside the main body 2, there are also provided a second driving gear 68, a second driven gear 69, and a third endless belt 70. The second driving gear 68 is coaxial with a rotational axis of the rear wheel motor 61b. The second driven gear 69 is coaxial with the wheel 4 (in this case, the rear wheel 4b). The third endless belt 70 is tensioned over the second driving gear 68 and the second driven gear 69.

The tension adjustment mechanism 63 adjusts a tension of the endless belt 62 (in this case, the second endless belt 62b) in response to a movement of the wheel 4 caused by the suspension mechanism 50, thereby keeping the tension within a certain range. The tension adjustment mechanism 63 includes a belt pressing portion 63a and an energizing mechanism 63b.

The belt pressing portion 63a presses the second endless belt 62b from above, thereby applying a tension to the second endless belt 62b. The energizing mechanism 63b includes a spring, for example, and energizes the belt pressing portion 63a downward.

In the above-mentioned configuration, even when the suspension mechanism 50 causes the wheel 4 to move in the up and down direction and a tension of the second endless belt 62b changes in a direction of loosening accordingly, the belt pressing portion 63a presses the second endless belt 62b by an energizing force of the energizing mechanism 63b, thereby applying a tension (increasing a tension) to the second endless belt 62b. Conversely, when the tension of the second endless belt 62b changes in the direction of tightening as the wheel 4 moves in the up and down direction, the above tension can be avoided from increasing too much by reducing a pressing force of the belt pressing portion 63a on the second endless belt 62b. For example, by setting the energizing force of the energizing mechanism 63b to be smaller than an energizing force corresponding to an upper limit of the tension of the second endless belt 62b, the tension of the second endless belt 62b can be maintained within a certain range to avoid the belt pressing portion 63a pressing the second endless belt 62b too much by the energizing force of the energizing mechanism 63b.

Therefore, from a viewpoint of properly driving the wheel 4 by properly transmitting a driving force of the motor 61 to the wheel 4 via the second endless belt 62b, it is desirable that the marking robot 1 comprises the tension adjustment mechanism 63 for keeping the tension of the second endless belt 62b within a certain range.

### [4. Details of Marking Unit]

In this embodiment, as described above, even at locations where foreign matter exists on the floor surface FL, the front wheel 4a of the marking robot 1 is not lifted off the floor surface FL by the suspension mechanism 50 and is grounded on the floor surface FL. This suppresses a tilt of the main body 2 in the roll direction or the pitch direction, for example.

Therefore, even at locations where foreign matter exists on the floor surface FL, in order to ensure that ink is discharged at an accurate position by the marking unit 3, it is effective for the marking unit 3 to be located near the front wheel 4a, where the suspension mechanism 50 suppresses the tilt of the main body 2. In other words, it is desirable that the marking unit 3 is attached on the front side of the main body 2 and located closer to the front wheel 4a than the rear wheel 4b on the main body 2.

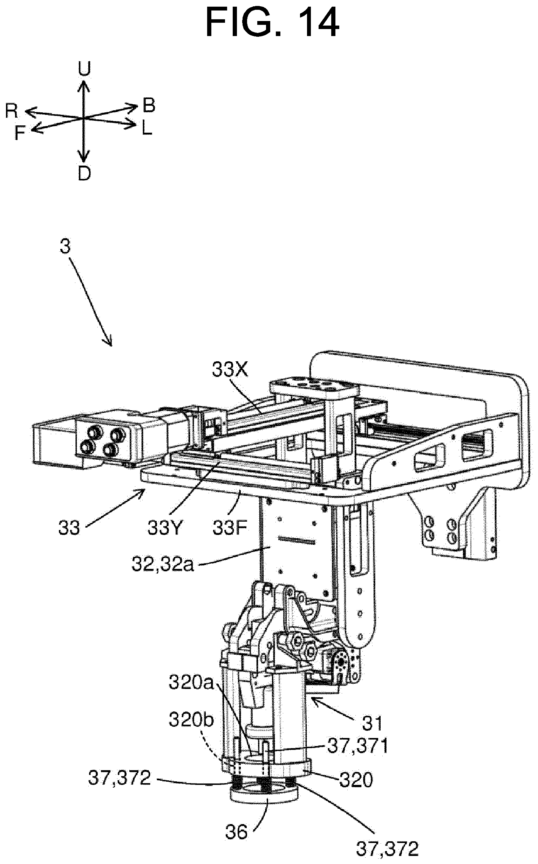

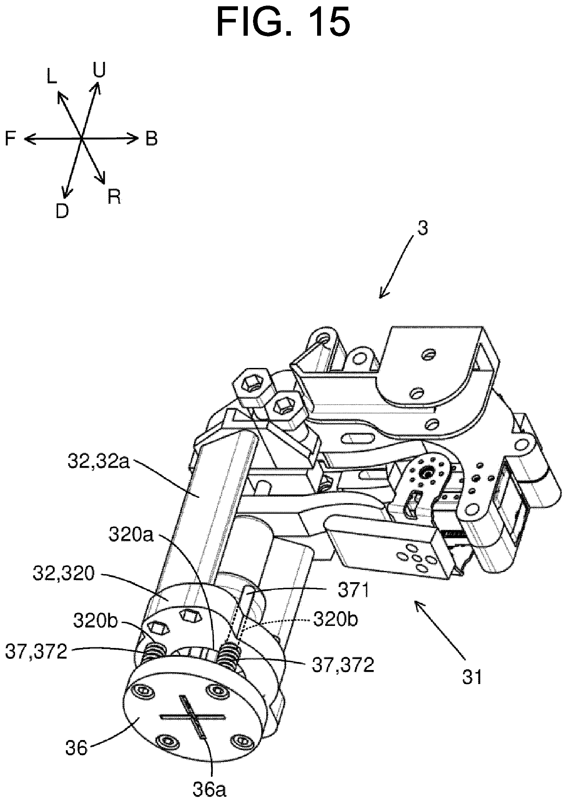

FIG. 14 is an enlarged perspective view of the marking unit 3. FIG. 15 is an enlarged perspective view of the discharge part 31 of the marking unit 3. The marking unit 3 further comprises a marker mask 36 and a mask support 37.

The marker mask 36 has a predetermined-shaped opening portion 36a (see FIG. 15) through which ink discharged from the discharge part 31 passes. In this embodiment, a shape of the opening portion 36a is cross-shaped, but it is not limited to this shape and may be round, triangular, square, or any other shapes. The mask support 37 supports the marker mask 36 relative to the holding part 32.

The holding part 32 has a protective plate 320. The protective plate 320 is located between the discharge part 31 (especially a tip part on an ink discharge side) and the marker mask 36. The protective plate 320 has a passage opening 320a through which the ink discharged from the discharge part 31 passes.

After the plurality of wheels 4 are driven to move the main body 2 to a desired position on the floor surface FL, the holding part 32 is moved downward by the moving mechanism 33, and the marker mask 36 contacts the floor surface FL (see FIG. 4). In this state, when ink is discharged from the discharge part 31, the ink lands on the floor surface FL through the passage opening 320a of the protective plate 320 and the opening portion 36a of the marker mask 36. This will result in a marking on the floor surface FL according to the shape of the opening portion 36a of the marker mask 36.

The protective plate 320 has a plurality of through holes 320b around the passage opening 320a. On the other hand, the mask support 37 has a plurality of bar-shaped members 371 and a plurality of coil springs 372.

The plurality of bar-shaped members 371 are attached to different positions of the marker mask 36. The bar-shaped members 371 pass through the through holes 320b, respectively, at different locations of the protective plate 320. The coil springs 372 are located around the plurality of bar-shaped members 371, respectively, between the protective plate 320 and the marker mask 36. The coil springs 372 press the marker mask 36 relative to the protective plate 320 (with the protective plate 320 as a starting point).

The marker mask 36 is pressed by the coil springs 372 at a plurality of locations where the bar-shaped members 371 are located with the protective plate 320 as a reference. Therefore, when the holding part 32 is moved downward by the moving mechanism 33, a separation distance between the marker mask 36 and the protective plate 320 can be adjusted (e.g., contracted against pressing forces of the coil springs 372) at a plurality of locations on the marker mask 36.

When the holding part 32 is moved downward by the moving mechanism 33, it is desirable that the marker mask 36 softly contact the floor surface FL so as to reduce damage caused by the contact of the marker mask 36 with the floor surface FL. To achieve a soft contact of the marker mask 36 with the floor surface FL, it is desirable that the separation distance between the marker mask 36 and the protective plate 320 can be adjusted at a plurality of locations on the marker mask 36, as described above.

In particular, from a viewpoint of reliably realizing the above-mentioned configuration that enables adjustment of the above-mentioned separation distance at a plurality of locations on the marker mask 36, it is desirable that the mask support 37 have the plurality of bar-shaped members 371 and the plurality of coil springs 372.

### [5. Correction of Deviation of Discharge Position]

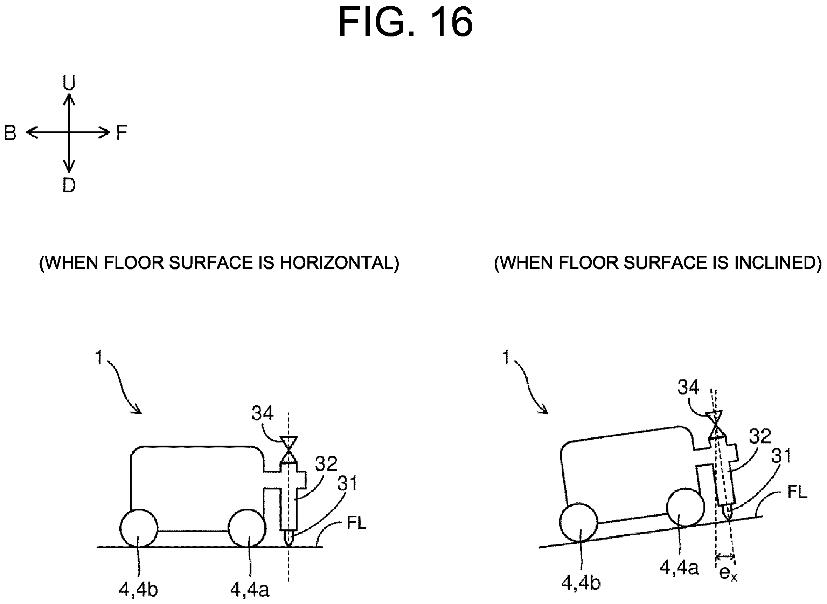

FIG. 16 is a side view schematically illustrating a positional relationship between the optical prism 34 and the discharge part 31 that are provided in the marking robot 1, when the marking robot 1 travels on a horizontal floor surface FL and when the marking robot 1 travels on an inclined floor surface FL. For ease of understanding of the explanation, it is assumed here that when the marking robot 1 travels on the horizontal floor surface FL, the discharge part 31 is located just under the optical prism 34 (downward in the direction of gravity).

From the same figure, the following can be seen. In other words, a position of the optical prism 34 in a horizontal direction (X and Y directions) is equal to a position of the discharge part 31 in the horizontal direction only when a pitch angle and a roll angle of the marking robot 1 are 0 degrees. When the marking robot 1 tilts in the pitch direction, for example, the discharge position of ink on the floor surface FL by the discharge part 31 deviates from the vertical downward position of the optical prism 34 by ex in the front and back direction (X direction).

Therefore, when the floor surface FL is inclined, it is necessary to compensate for a deviation (error) of the discharge position of ink by the discharge part 31. To correct the above deviation of the discharge position, it is necessary to estimate a direction of a vertical axis, i.e., a versor, of the moving mechanism 33, which is an end-effector.

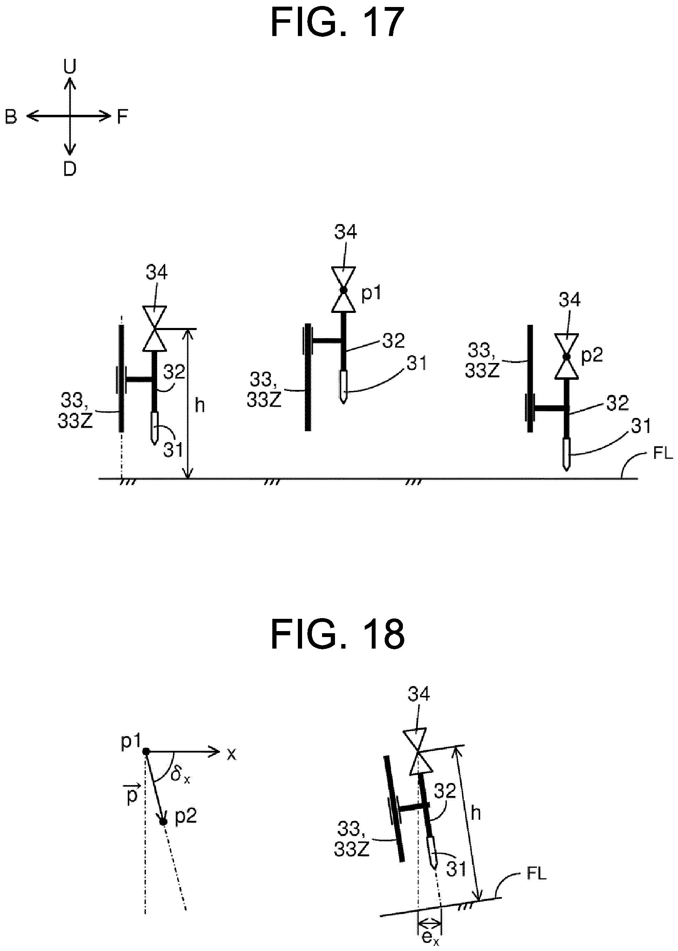

FIG. 17 schematically illustrates different positions of the optical prism 34 (first position p1, second position p2). The first position p1 is a center position of the optical prism 34 held by the holding part 32 when the holding part 32 moves to a highest position along the third rail 33Z of the moving mechanism 33. The second position p2 is the center position of the optical prism 34 held by the holding part 32 when the holding part 32 moves to almost a lowest position along the third rail 33Z. However, at the second position p2 of the optical prism 34, the marker mask 36 (see Fig. 15, etc.) located at the tip side of the discharge part 31 is not in contact with the floor surface FL. A h in the figure is a height of the center of the optical prism 34 from the floor surface FL at a neutral position of the first position p1 and the second position p2.

The direction of the vertical axis (versor p→) of the end-effector is obtained by measuring two different first and second positions p1 and p2 using the total station 10 (see FIG. 3).

FIG. 18 is a schematic illustration of an angular relationship between a versor and an axis i, as well as an offset e illustrating a deviation of a discharge position. Note that i is any one of x, y, or z, where x, y, and z correspond to the X direction, the Y direction, and the Z direction, respectively. As an example, a case where i = x is illustrated here.

Therefore, when the marking robot 1 travels on the inclined floor surface FL, ink can be discharged (marked) by the discharge part 31 at a desired position by controlling the moving mechanism 33 and finely adjusting the position of the discharge part 31 via the holding part 32 by the offset e described above. In other words, even when the floor surface FL is inclined, the ink can be discharged with appropriate correction of the deviation of the discharge position.

As in this embodiment, if the position of the optical prism 34 in the horizontal direction and the position of the discharge part 31 in the horizontal direction are originally deviated on the horizontal floor surface FL, the moving mechanism 33 may adjust the position of the discharge part 31 by further taking into account an amount of an original deviation.

In the above, from a viewpoint of correcting the deviation of the discharge position of ink when the floor surface FL is inclined, so that ink is properly (accurately) discharged by the discharge part 31 at the desired position on the floor surface FL, it can be said that the marking unit 3 preferably has the optical prism 34 and that the moving mechanism 33 preferably moves the discharge part 31 via the holding part 32 by an amount of the deviation (offset e) of the discharge position determined by a tilt (versor) of the moving mechanism 33 relative to the vertical axis. In this case, the above tilt of the moving mechanism 33 is obtained on the basis of different height positions (first position p1 and second position p2) of the optical prism 34.

### [6. Others]

In this embodiment, a configuration in which some of the plurality of wheel support parts 5 (specifically, the wheel support parts 5 supporting the left and right front wheels 4a) each have a suspension mechanism 50 is described, but all of the plurality of wheel support parts 5 may each have a suspension mechanism 50.

In this embodiment, the case in which each of the wheels 4 is a mecanum wheel is described, but each of the wheels 4 is not limited to a mecanum wheel. Each of the wheels 4 can be a wheel that can use a rotational difference in drive wheels to turn and travel parallel in all directions, for example, an omniwheel.

### [7. Appendices]

The marking robot described in this embodiment can also be expressed as the following appendices.

The marking robot of Appendix (1) comprises a main body to which a marking unit is attached, a plurality of wheels; and a plurality of wheel support parts attached to the main body to support the plurality of wheels respectively, wherein at least one of the plurality of wheel support parts has a suspension mechanism.

The marking robot of Appendix (2) is the marking robot according to Appendix (1), wherein the suspension mechanism has an energizing member that energizes the wheel in a direction of pressing down the wheel relative to the main body.

The marking robot of Appendix (3) is the marking robot according to Appendix (2), wherein the plurality of wheels includes a front wheel and a rear wheel, and among the plurality of wheel support parts, the wheel support part supporting the front wheel has a suspension mechanism.

The marking robot of Appendix (4) is the marking robot according to Appendix (3), wherein the plurality of wheels includes the front wheel and the rear wheel that respectively include right and left front wheels and left and right rear wheels, and among the plurality of wheel support parts, the wheel support parts supporting the left and right front wheels each have the suspension mechanism.

The marking robot of Appendix (5) is the marking robot according to any of Appendices (2) to (4), wherein the suspension mechanism further comprises a first bracket attached to the main body via a support plate, a second bracket attached via a mounting stay to a wheel frame pivotally supporting the wheel and located lower than the first bracket, and a damper fixed at one end to the first bracket and fixed at the other end to the second bracket.

The marking robot of Appendix (6) is the marking robot according to Appendix (5), wherein the damper has a piston rod and a cylinder that accommodates the piston rod in a movable manner, the piston rod has the one end, and also has a first flange on an outer circumference surface of the piston rod, the cylinder has said the other end, and also has a second flange on an outer circumference surface of the cylinder, and the energizing member has a first end fixed to the first flange and a second end fixed to the second flange.

The marking robot of Appendix (7) is the marking robot according to Appendix (5) or (6), wherein the main body has a flat plate part opposite an upper surface part of the wheel frame, and a guide rail attached to the flat plate part and extending downward, and the upper surface part of the wheel frame has a hole through which the guide rail passes.

The marking robot of Appendix (8) is the marking robot according to Appendix (7), wherein the wheel frame has a side surface part connected to the upper surface part, the main body has an opposing part located opposite the side surface part, and one of the opposing part and the side surface part is provided with a long hole extending in an up and down direction, and the other of the opposing part and the side surface part is provided with a pin passing through the long hole.

The marking robot of Appendix (9) is the marking robot according to any of Appendices (1) to (8), wherein further comprises a motor, an endless belt that transmits a driving force of the motor to the wheel supported by the suspension mechanism, and a tension adjustment mechanism that adjust a tension of the endless belt in response to a movement of the wheel caused by the suspension mechanism, thereby keeping the tension within a certain range.

The marking robot of Appendix (10) is the marking robot according to Appendix (4), wherein the marking unit is attached on a front side of the main body.

The marking robot of Appendix (11) is the marking robot according to any of Appendices (1) to (10), wherein the marking unit comprises a discharge part that discharges ink, a holding part that holds the discharge part, a moving mechanism that moves the holding part in a three-dimensional direction, a marker mask having a predetermined-shaped opening portion through which the ink passes, and a mask support part supporting the marker mask relative to the holding part, the holding part is located between the discharge part and the marker mask, and has a protective plate having a passage opening through which the ink passes, and a separation distance between the marker mask and the protective plate can be adjusted at a plurality of locations on the marker mask.

The marking robot of Appendix (12) is the marking robot according to Appendix (11), wherein the protective plate has a plurality of through holes around the passage opening, and the mask support portion has a plurality of bar-shaped members attached to different positions of the marker mask and respectively passing through the through holes in the protective plate, and has a coil spring located, between the protective plate and the marker mask, around each of the plurality of bar-shaped members to press the marker mask against the protective plate.

The marking robot of Appendix (13) is the marking robot according to Appendix (11) or (12), wherein the marking unit further comprises an optical prism that reflects light emitted from an external total station, the holding part further holds the optical prism in addition to the discharge part, the moving mechanism moves the discharge part via the holding part by an amount of a deviation of the discharge position determined by a tilt of the moving mechanism relative to a vertical axis, and the tilt of the moving mechanism is obtained on the basis of different height positions of the optical prism.

The marking robot of Appendix (14) is the marking robot according to any of Appendices (1) to (13), wherein the plurality of wheels are mecanum wheels.

The marking system of Appendix (15) comprises a marking robot according to any of Appendices (1) to (14), and a total station for detecting a position of the marking robot by emitting light to the marking robot and receiving light reflected by the marking robot, wherein the marking robot is provided with a control unit for driving the plurality of wheels on the basis of a control signal, which is sent from outside on the basis of a position of the marking robot 1 detected by the total station and a map of an external environment.

The embodiment of the present invention has been described above, but the scope of the present invention is not limited thereto. The present invention can be carried out within an extended or modified range without departing from the gist of the present invention.

### INDUSTRIAL APPLICABILITY

The present invention can be used, for example, for marking work at a building construction site.

### REFERENCE SIGNS LIST

1: Marking robot
2: Main body
3: Marking unit
4: Wheel
4a: Front wheel
4b: Rear wheel
5: Wheel support part
10: Total station
21: Control unit
31: Discharge part
32: Holding part
33: Moving mechanism
34: Optical prism
36: Marker mask
36a: Opening portion
37: Mask support
50: Suspension mechanism
51: Energizing member
51a: First end
51b: Second end
52: First bracket
53: Second bracket
54: Damper
54a: One end
54b: Other end
55: Support plate
56: Wheel frame
57: Mounting stay
58: Piston rod
58a: First flange
59: Cylinder
59a: Second flange
61: Motor
62: Endless belt
62a: First endless belt
62b: Second endless belt
63: Tension adjustment mechanism
100: Marking system
201: Flat plate part
202: Guide rail
203: Opposing part
203a: Long hole
320: Protective plate
320a: Passage opening
320b: Through hole
371: Bar-shaped member
561: Upper surface part
561a: Hole
562: Side surface part
562a: First side surface part
562b: Second side surface part
563: Pin
FL: Floor surface

## Claims

1. A marking robot, comprising:
a main body to which a marking unit is attached;
a plurality of wheels; and
a plurality of wheel support parts attached to the main body to support the plurality of wheels respectively,
wherein at least one of the plurality of wheel support parts has a suspension mechanism.

2. The marking robot according to claim 1, wherein
the suspension mechanism has an energizing member that energizes the wheel in a direction of pressing down the wheel relative to the main body.

3. The marking robot according to claim 2, wherein
the plurality of wheels includes a front wheel and a rear wheel, and
among the plurality of wheel support parts, the wheel support part supporting the front wheel has the suspension mechanism.

4. The marking robot according to claim 3, wherein
the plurality of wheels includes the front wheel and the rear wheel that respectively include right and left front wheels and left and right rear wheels, and
among the plurality of wheel support parts, wheel support parts supporting the left and right front wheels each have the suspension mechanism.

5. The marking robot according to any of claims 2 to 4, wherein
the suspension mechanism further has:
a first bracket attached to the main body via a support plate;
a second bracket attached via a mounting stay to a wheel frame pivotally supporting the wheel and located lower than the first bracket; and
a damper fixed at one end to the first bracket and fixed at an other end to the second bracket.

6. The marking robot according to claim 5, wherein
the damper has a piston rod and a cylinder that accommodates the piston rod in a movable manner,
the piston rod has the one end, and also has a first flange on an outer circumference surface of the piston rod,
the cylinder has the other end, and also has a second flange on an outer circumference surface of the cylinder, and
the energizing member has a first end fixed to the first flange and a second end fixed to the second flange.

7. The marking robot according to claim 5 or 6, wherein
the main body has:
a flat plate part opposite an upper surface part of the wheel frame; and
a guide rail attached to the flat plate part and extending downward, and
the upper surface part of the wheel frame has a hole through which the guide rail passes.

8. The marking robot according to claim 7, wherein
the wheel frame has a side surface part connected to the upper surface part,
the main body has an opposing part located opposite the side surface part, and
one of the opposing part and the side surface part is provided with a long hole extending in an up and down direction, and the other of the opposing part and the side surface part is provided with a pin passing through the long hole.

9. The marking robot according to any of claims 1 to 8, further comprising:
a motor;
an endless belt that transmits a driving force of the motor to the wheel supported by the suspension mechanism; and
a tension adjustment mechanism that adjusts a tension of the endless belt in response to a movement of the wheel caused by the suspension mechanism, thereby keeping the tension within a certain range.

10. The marking robot according to claim 4, wherein
the marking unit is attached on a front side of the main body.

11. The marking robot according to any of claims 1 to 10, wherein
the marking unit has:
a discharge part that discharges ink;
a holding part that holds the discharge part;
a moving mechanism that moves the holding part in a three-dimensional direction;
a marker mask having a predetermined-shaped opening portion through which the ink passes; and
a mask support part supporting the marker mask relative to the holding part,
the holding part is located between the discharge part and the marker mask, and has a protective plate having a passage opening through which the ink passes, and
a separation distance between the marker mask and the protective plate can be adjusted at a plurality of locations on the marker mask.

12. The marking robot according to claim 11, wherein
the protective plate has a plurality of through holes around the passage opening, and
the mask support portion has:
a plurality of bar-shaped members attached to different positions of the marker mask and respectively passing through the through holes in the protective plate; and
a coil spring located, between the protective plate and the marker mask, around each of the plurality of bar-shaped members to press the marker mask against the protective plate.

13. The marking robot according to claim 11 or 12, wherein
the marking unit further has an optical prism that reflects light emitted from an external total station,
the holding part further holds the optical prism in addition to the discharge part,
the moving mechanism moves the discharge part via the holding part by an amount of a deviation of a discharge position determined by a tilt of the moving mechanism relative to a vertical axis, and
the tilt of the moving mechanism is obtained on the basis of different height positions of the optical prism.

14. The marking robot according to any of claims 1 to 13, wherein
the plurality of wheels are mecanum wheels.

15. A marking system, comprising:
a marking robot according to any of claims 1 to 14; and
a total station detecting a position of the marking robot by emitting light to the marking robot and receiving light reflected by the marking robot,
wherein the marking robot is provided with a control unit driving the plurality of wheels on the basis of a control signal, which is sent from outside on the basis of a position of the marking robot detected by the total station and a map of an external environment.
